# EUROPÄISCHE PATENTANMELDUNG

(11) **EP 4 273 958 A1**
(43) Veröffentlichungstag der Anmeldung: **08.11.2023**
(21) Anmeldenummer: 22172104.6
(22) Anmeldetag: 06.05.2022
(51) Int. Cl.: H01M 4/139, G01N 21/31, G01N 21/84, G01N 21/88, H01M 10/052

(54) **BESTIMMUNG DES FEUCHTEGEHALTS BEI DER ELEKTRODENFERTIGUNG FÜR BATTERIEZELLEN**

(71) Anmelder: Siemens Aktiengesellschaft, 80333 München (DE)
(72) Erfinder: Gigler, Alexander Michael, 86836 Untermeitingen (DE); Schulte, Sascha, 91315 Höchstadt (DE); Baldauf, Manfred, 91056 Erlangen (DE); Otte, Clemens, 81739 München (DE); Pohle, Roland, 85570 Herdweg (DE); Kornely, Susanne, 82178 Puchheim (DE); Witt, Jonas, 96050 Bamberg (DE)
(74) Vertreter: Siemens Patent Attorneys

(57) **Zusammenfassung**

Die Erfindung gibt eine Vorrichtung zur hyperspektralen Bildgebung an Elektrodenbahnen (26, 1) bei der Elektrodenfertigung für Batteriezellen an. Die Vorrichtung weist auf:
- Mindestens eine hyperspektrale Spektroskopie-Einheit (27) aufweisend eine Zeilenkamera (21) zur Bildgebung, wobei die Spektroskopie-Einheit (27) angeordnet und eingerichtet ist,
- an einem vorgegebenen Ort der Elektrodenfertigung von der sich vorwärts bewegenden Elektrodenbahn (26, 1) hyperspektrale Bilder aufzunehmen,
- aus den Bildern ortsaufgelöste Feuchtegehalte der Elektrodenbahn (26, 1) zu ermitteln und
- bei einer Abweichung des Feuchtegehalts von einem vorgegebenen Sollwertbereich die örtliche Position in Längsrichtung der Elektrodenbahn (26, 1)25) zu ermitteln und zu sichern.

Die Erfindung gibt auch ein zugehöriges Verfahren zur hyperspektralen Bildgebung an Elektrodenbanen (26, 1) bei der Elektrodenfertigung für Batteriezellen an.

## Beschreibung

### GEBIET DER ERFINDUNG

Die Erfindung betrifft eine Vorrichtung und ein Verfahren zur hyperspektralen Bildgebung an Elektrodenbanen bei der Elektrodenfertigung für Batteriezellen

### HINTERGRUND DER ERFINDUNG

Lithium-Ionen-Akkumulatoren, im Folgenden auch Lithium-Ionen-Batterien genannt, werden aufgrund ihrer hohen Leistungsdichte und Energiedichte in mobilen und stationären Anwendungen als Energiespeicher eingesetzt.

Eine Lithium-Ionen-Batterie umfasst typischerweise mehrere Batteriezellen. Eine Batteriezelle, insbesondere eine Lithium-Ionen-Batteriezelle, umfasst eine Vielzahl von Schichten. Typischerweise umfassen diese Schichten Anoden, Kathoden, Separatoren und weitere Elemente. Diese Schichten können als Stapel oder als Wicklungen ausgestaltet sein.

Die Elektroden umfassen üblicherweise Metallfolien, insbesondere umfassend Kupfer und/oder Aluminium, welche mit einem Aktivmaterial beschichtet werden. Als Aktivmaterial wird dabei typischerweise eine lithiumhaltige Paste, Slurry genannt, aufgetragen. Die Folien und die Beschichtung weisen jeweils eine Dicke von einigen Mikrometern auf. Dadurch haben bereits einige Mikrometer Abweichung der Dicke der Beschichtung oder bei der Materialeigenschaft, insbesondere der Materialzusammensetzung, negative Auswirkungen auf die Qualität der Elektrode. Nachteilig werden bei unregelmäßiger Beschichtung somit qualitativ minderwertige Batteriezellen hergestellt. Weiterhin ist ein sicheres Betreiben der Batteriezelle nachteilig nicht sichergestellt.

Derzeit können im Stand der Technik fehlerhafte Beschichtungen häufig erst nach Abschluss des gesamten Produktionsprozesses der Batteriezelle im Rahmen eines sogenannten End-ofline-Tests durchgeführt werden. Teilweise werden fehlerhafte Beschichtungen auch erst nach mehreren Jahren der Batteriezelle im Betrieb festgestellt.

Batteriematerialien für die Batteriezellenfertigung werden in der Herstellung als zähflüssiges Medium (eine Beschichtungspaste, Englisch: Slurry) auf die Elektrodenbahn abgeschieden oder aufgetragen.

Die kontinuierliche Bestimmung von Materialparametern (z.B. Feuchte, Zusammensetzung, Homogenität einer Zutat, etc.) entlang einer (endlos langen) Fertigungsstrecke / Produktbahn (z.B. Batterie-Elektroden, Papierbahn, Stahl, etc.) bzw. einer Serienfertigungsanlage (z.B. Kekse, Brezeln, Bremsbeläge, etc.) ist von kritischer Bedeutung für das Ergebnis.

Speziell die Batteriezellfertigung (hier bezogen auf Li-Ionen-Zellen) ist heute sehr häufig von explorativem Vorgehen geprägt (d.h. eher eine Mischung aus Handwerk und Kunst statt Wissenschaft bzw. komplett verstandener industrieller Prozess). Das pastöse aktive Material (= Slurry) wird dabei auf eine lange Trägerfolie (typischerweise sequenziell) auf beiden Seiten aufgebracht, getrocknet und weiterverarbeitet und bildet so die Elektrodenbahn.

Dabei sind v.a. Prozessparameter häufig als Kochrezepte (z.B. Trocknung für x Stunden bei y Grad) hinterlegt und werden selten mittels Sensoren überwacht. Da in der pastösen Mischung, die auf die Trägerfolie aufgebracht wird, neben anderen Materialien ein Lösungsmittel, wie z.B. Wasser, eingesetzt wird, muss es vor dem Abschluss der Produktion herausgetrocknet werden.

Bei einer suboptimal homogenisierten Mischung werden dabei Bereiche auftreten, die beim Beschichten feuchter oder trockener sind. In der weiteren Verarbeitung können diese Bereiche dann weiterhin zu feucht sein, oder auf Grund der Spröde bei zu geringer Feuchte zu Abplatzungen und Rissbildung führen.

Schließlich ist die Restfeuchte (ob zu hoch oder zu niedrig) ein wesentlicher Einflussfaktor auf die Qualität einer Batteriezelle. Typischerweise ist ein Sollwert von einigen wenigen 100 ppm (je nach Zellchemie und Prozess) nicht zu überschreiten, wobei die Homogenität der Verteilung für eine optimale Prozessführung ein kritisches Merkmal darstellt.

Bekannt ist, Stichproben extraktiv aus der produzierten Elektrodenbahn zu stanzen oder ganze Abschnitte aus der Produktion zu entnehmen. Das so entnommene Material wird mittels Karl-Fischer-Titration auf seinen Feuchtegehalt untersucht. Eine weitere Methode ist das Wiegen unter Heizen der Probe. Der Gewichtsverlust entspricht dabei der Menge Wasser, die aus der Probe abdampft und wird auf die Beschichtung zurückgerechnet.

Nichtinvasive Methoden umfassen typischerweise punktuelle Analysen mittel Spektroskopie (dispersives IR, FTIR oder Raman-Spektroskopie). Auch hierzu werden typischerweise Proben entnommen und im Labor analysiert. Die Daten werden in ein zuvor kalibriertes Vorhersagemodell gespeist und ergeben eine Prädiktion des Feuchtegehalts.

### ZUSAMMENFASSUNG DER ERFINDUNG

Es ist Aufgabe der Erfindung, eine Lösung anzugeben, welche die Elektrodenfertigung für Batteriezellen verbessert.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung betrifft die Bestimmung der örtlichen Position von Feuchte in Elektrodenbahnen bei der Herstellung der beschichteten Elektroden für die Batteriefertigung.

Die Erfindung beanspruch eine Vorrichtung zur hyperspektralen Bildgebung an Elektrodenbahnen bei der Elektrodenfertigung für Batteriezellen. Die Vorrichtung weist auf:
Mindestens eine hyperspektrale Spektroskopie-Einheit aufweisend eine Zeilenkamera zur Bildgebung, wobei die Spektroskopie-Einheit angeordnet und eingerichtet ist,
- an einem vorgegebenen Ort der Elektrodenfertigung von der sich vorwärts bewegenden Elektrodenbahn hyperspektrale Bilder aufzunehmen,
- aus den Bildern ortsaufgelöste Feuchtegehalte der Elektrodenbahn zu ermitteln und
- bei einer Abweichung des Feuchtegehalts von einem vorgegebenen Sollwertbereich die örtliche Position in Längsrichtung der Elektrodenbahn zu ermitteln und zu sichern.

Die Elektrodenbahn ist eine mit dem Slurry beschichtete Trägerfolie. Die Zeilenkamerawird im Englischen als "Push-Broom-Scanner" bezeichnet. "Sichern" wird weit gefasst, auch im Sinne von "speichern" oder "markieren". Der Sollwertebereich gibt Feuchtigkeitswerte an, die für eine fehlerfreie Funktion einer Batteriezelle erforderlich sind. Gegebenenfalls können auch unterschiedliche Bereiche gewählt werden, die verschiedenen Qualitätsklassen entsprechen.

In einer Weiterbildung weist die Vorrichtung eine Umlenkrolle auf, über die die Elektrodenbahn geführt wird, wobei an der Position der Kontaktfläche zwischen der Umlenkrolle und der Elektrodenbahn die Zeilenkamera die Bilder aufnimmt.

In einer Weiterbildung ist die Vorrichtung ausgebildet, das Sichern der örtlichen Position des vom Sollwerteberich abweichenden Feuchtegehalts durch Markieren auf der Elektrodenbahn auszuführen. Die Markierungen können beispielsweise beim Schneiden der Elektrodenbahn wieder gefunden werden und zum Sortieren verwendet.

In einer Weiterbildung weist die Vorrichtung eine Graviereinheit auf, die eingerichtet ist, das Markieren durch eine Gravur vorzugsweise am Längsrand der Elektrodenbahn auszuführen. Dies kann zum Beispiel durch eine Lasergraviermaschine erfolgen.

In einer Weiterbildung weist die Vorrichtung eine Speichereinheit auf, die eingerichtet ist, spektrale Charakteristika des vom Sollwerteberich abweichenden Feuchtegehalts als Ortskodierung entlang der Elektrodenbahn derart zu sichern, dass die Position des vom Sollwerteberich abweichenden Feuchtegehalts anhand der spektralen Charakteristika auffindbar ist. Die gespeicherten Spektren des vom Sollwerteberich abweichenden Feuchtegehalts können beispielsweise beim Schneiden der Elektrodenbahn wieder gefunden werden.

In einer Weiterbildung weist die Vorrichtung ein Fertigungsleitsystem auf, mit dem die Spektroskopie-Einheit verbunden ist und das eingerichtet ist, die Spektroskopie-Einheit zur Messung zu triggern. Dies erlaubt eine spätere lokale Zuordnung der Messung, beispielsweise beim Schneiden und Sortieren von Elektrodenbahnen.

In einer Weiterbildung weist die Vorrichtung eine Auswerte- und Recheneinheit am Ort der Spektroskopie-Einheit auf, wobei die Auswerte- und Recheneinheit eingerichtet ist, Daten der spektroskopischen Bildgebung in einem Vektor vorzuverdichten und der örtlichen Position zuzuordnen. Dadurch wird ein Maß für die laterale Verteilung von Materialien entlang einer betrachteten Messlinie ermittelt. D.h. ein Vektor des vom Sollwerteberich abweichenden Feuchtegehalts wird erstellt.

In einer Weiterbildung ist die Zeilenkamera eine SWIR-Zeilenkamera. Damit ist eine kostengünstige Lösung möglich.

In einer Weiterbildung weist die Vorrichtung in der Spektroskopie-Einheit eine KI - Engine auf, die eingerichtet ist, computergestützt die vom Sollwerteberich abweichenden Feuchtegehalte zu ermitteln.

In einer Weiterbildung weist wird die KI - Engine mittels Deep-Learning-Methoden trainiert, um aus den Spektren die des vom Sollwerteberich abweichenden Feuchtegehalts zu ermitteln.

Die Erfindung beansprucht auch ein Verfahren zur Ermittlung von Inhomogenitäten mittels hyperspektraler Bildgebung an Elektrodenbahnen bei der Elektrodenfertigung für Batteriezellen, mit folgenden Schritten:
- Aufnehmen von hyperspektralen Bildern an einem vorgegebenen Ort der Elektrodenfertigung von der sich vorwärts bewegenden Elektrodenbahn,
- Ermittlung von Feuchtegehalten der Elektrodenbahn aus den Spektren der Bilder und
- Ermittlung und Sicherung der örtlichen Position der von einem vorgegebenen Sollwerteberich abweichenden Feuchtegehalte in Längsrichtung der Elektrodenbahn.

In einer Weiterbildung des Verfahrens werden an der Position der Kontaktfläche zwischen einer Umlenkrolle, über die die Elektrodenbahn geführt wird, und der Elektrodenbahn durch die Zeilenkamera die Bilder aufgenommen.

In einer Weiterbildung des Verfahrens erfolgt das Sichern der örtlichen Position des vom Sollwerteberich abweichenden Feuchtegehalts durch ein Markieren auf der Elektrodenbahn.

In einer Weiterbildung des Verfahrens werden die spektralen Charakteristika des vom Sollwerteberich abweichenden Feuchtegehalts als Ortskodierung entlang der Elektrodenbahn derart gespeichert, dass die Position des vom Sollwerteberich abweichenden Feuchtegehalts anhand der spektralen Charakteristika auffindbar ist.

In einer Weiterbildung des Verfahrens werden mittels einer KI - Engine computergestützt die vom Sollwerteberich abweichenden Feuchtegehalte ermittelt.

Die Erfindung bietet u.a. folgende Vorteile:
- eine direkte, nicht destruktive Onlinemessung.
- eine Messung an einer Umlenkrolle bzw. über einem unterstützen /stabilisierenden Bahnsegment,
- eine direkte Online-Bewertung, die ein Closed-Loop-Feedback mit z.B. dem vorgeschalteten Trockner erlaubt,
- eine Feld-nahe Vorverdichtung der Daten, die die Last auf die IT reduziert und durch die damit einhergehende semantische Annotation eine physikalisch "richtige" Bewertung erlaubt (im Sinne von realen Messgrößen statt Hausnummern),
- eine Schaffung der Semantischen Annotation,
- eine Integration in die Fertigungsautomatisierung,
- eine Zuordnung zu einer Position entlang dem "Produkt",
- eine Rückverfolgbarkeit,
- eine kontinuierliche Messinformation und
- eine zerstörungsfreie Probennahme.

Die kontinuierliche Erfassung im Prozess liefert charakteristische 2D Restfeuchteverteilungen, welche sich zur Identifikation oder einem Wiedererkennen von Bahnsegmenten an nachfolgenden Prozessschritten eignen.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
FIG. 1 die Beschichtung der Trägerfolie,
FIG. 2 die Trocknung der beschichteten Trägerfolie,
FIG. 3 das Kalandern der getrockneten Trägerfolie,
FIG. 4 ein Blockschaltbild der Vorrichtung zur hyperspektralen Bildgebung und
FIG. 5 eine Ansicht der hyperspektralen Messanordnung mit einem Ausschnitt eines Hyperspektralbildes einer Elektrodenbahn.

### DETAILLIERTE BESCHREIBUNG DER ERFINDUNG

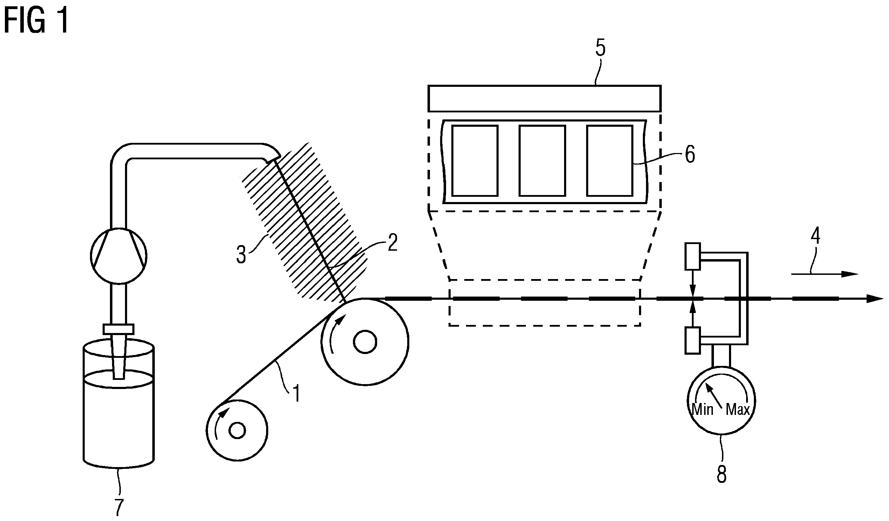

FIG. 1 bis FIG. 3 zeigen schematisch und beispielshaft eine Elektrodenfertigung für Batterien. Als erstes wird eine Trägerfolie 1 mit dem Slurry 2, das aus einem Speicher 7 gefördert wird, über ein Auftragswerkzeug 3, z.B. eine Schlitzdüse, eine Rakel oder eine Rasterwalze, beschichtet (FIG. 1). Die Trägerfolie 1 wird in Beschichtungsrichtung 4 entweder kontinuierlich oder intermittierend (intermittierende Beschichtung 6 in der Draufsicht 5) beschichtet.

Die Foliendicken (Anode - Kupferfolie und Kathode - Aluminiumfolie) schwanken je nach Batteriezellendesign zwischen 10 µm und 25 µm. Die Trägerfolie 1 wird auf einer Breite von bis zu 900 mm in einem Rolle-zu-Rolle-Prozess beschichtet. Die Beschichtung der Folienober- und Folienunterseite erfolgt je nach Ausgestaltung der Fertigungsanlage entweder sequenziell oder gleichzeitig. Die Dicke der Beschichtung 6 mit dem Slurry 2 wird in noch feuchtem Zustand mit einer Nassdickenmessung 8 ermittelt.

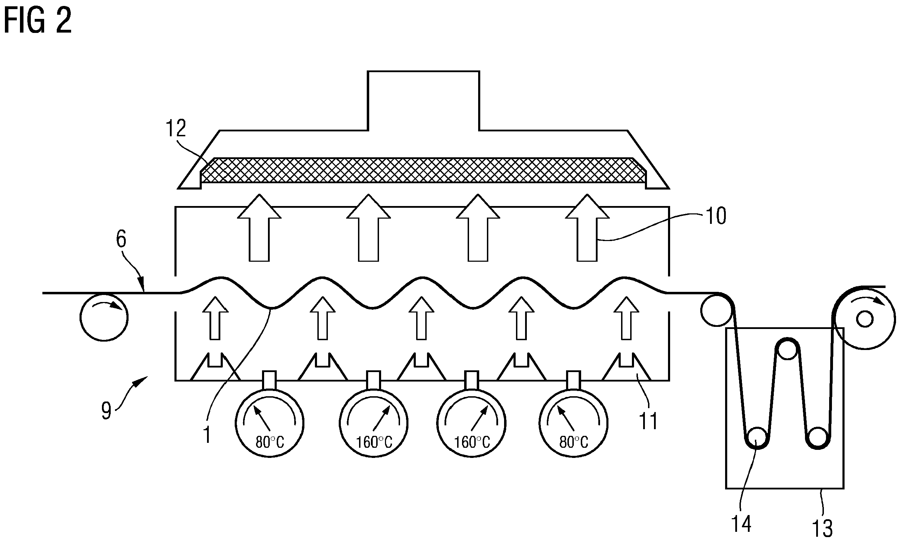

Nach dem Beschichten (FIG. 1) wird die beschichtete Trägerfolie 1 (auch als Elektrodenbahn bezeichenbar) direkt in einen Trockner 9 (FIG. 2) geführt. Bei einer simultanen, doppelseitigen Beschichtung wird ein Schwebebahntrockner verwendet. Das Lösungsmittel (Dämpfe 10 über Abzug 12) wird der Beschichtung 6 durch Wärmezufuhr über Luftdüsen 11 entzogen und wieder zurückgewonnen oder der thermischen Verwertung zugeführt.

Die Trocknerlänge ist entscheidend für die realisierbare Durchlaufgeschwindigkeit. Der Trockner 9 ist zur Umsetzung eines individuellen Temperaturprofils in verschieden Temperaturzonen unterteilt. Nach dem Trocknerdurchlauf wird die getrocknete Elektrodenbahn (= beschichtete Trägerfolie 1) auf Raumtemperatur mit einer Kühleinrichtung 13 mit Hilfe von Kühlwalzen 14 abgekühlt.

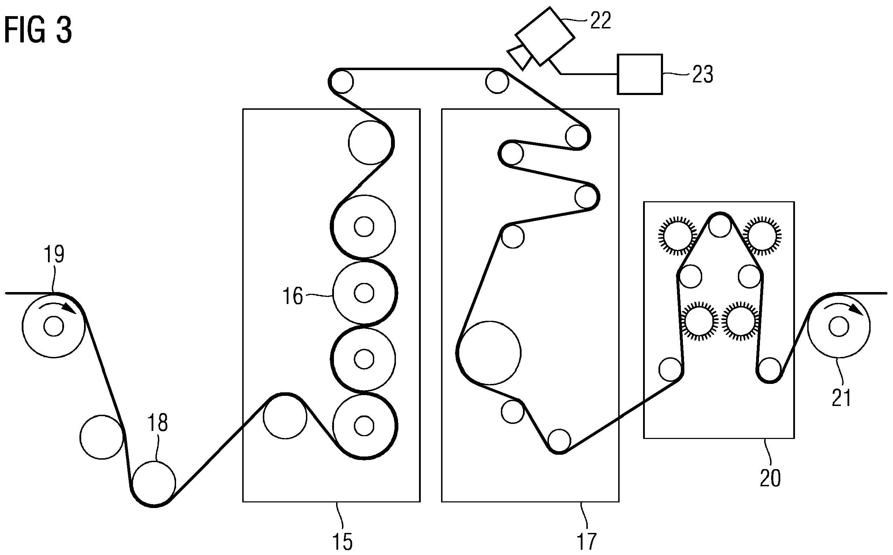

Bei dem anschließenden Kalandern 15 (FIG. 3) wird die beidseitig beschichtete Trägerfolie 1 durch ein oder mehrere rotierende Walzenpaare 16 verdichtet. Die Verdichtung der Folie erfolgt durch Ober- und Unterwalzen. Das Walzenpaar 16 erzeugt einen exakt einstellbaren Liniendruck. Der Liniendruck bestimmt die Porosität der Elektrodenbahn. Ein zu stark eingestellter Liniendruck erzeugt einen Quetschvorgang und beschädigt die Elektrodenbahn. Die Sauberkeit des Walzenpaars 16 ist für die Vermeidung des Eindringens von Fremdpartikeln in das Substratmaterial entscheidend.

Der Transport der Trägerfolie 1 durch den Kalander 15 erfolgt mit Hilfe eines Zugwerks 17. Der Einzug 18 sorgt für einen sauberen Einlauf von einer Speicherrolle 19 in den Kalander 15. Nach dem Kalandern wird die Elektrodenbahn in einem Reinigungswerk 20 gereinigt und als "Mutterspule 21" für eine Weiterverarbeitung zu Batteriezellen, wie zum Beispiel Schneiden, gelagert.

Vorteilhaft erfolgt eine hyperspektrale Messung nach der Trocknung (FIG. 2) oder nach dem Kalandern (FIG. 3) mit einer Zeilenkamera 22 und einer nachgeschalteten Auswerte- und Recheneinheit 23.

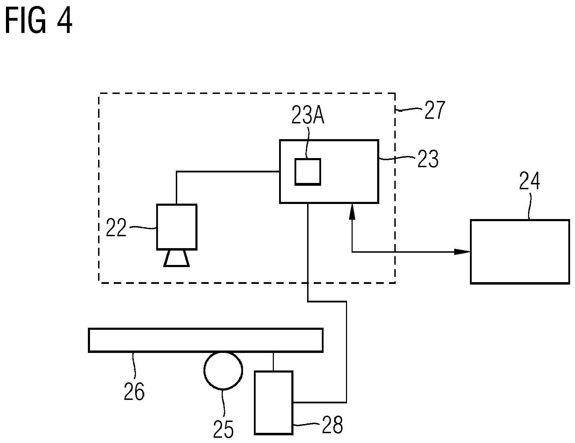

FIG. 4 zeigt das Blockschaltbild einer hyperspektralen Messanordnung aufweisend eine Spektroskopie-Einheit 27 mit einer Zeilenkamera 22, welche die hyperspektralen Bilder der beschichteten Trägerfolie (= Elektrodenbahn 26) am Ort einer Umlenkrolle 25 aufnimmt. Die Zeilenkamera 22 ist mit der Auswerte- und Recheneinheit 23 verbunden, die wiederum mit einem Fertigungsleitsystem 24 der Elektrodenbahnfertigung verbunden ist. Zur Markierung der Elektrodenbahn 26 beispielsweise an festgestellten Feuchteabweichungen von einem Sollwert ist eine Graviereinheit 28 vorgesehen. In einer Speichereinheit 23.1 können beispielsweise die ortlochen Positionen oder die Spektren von Feuchte durch Speicherung gesichert werden.

Hyperspektrale Bildgebung in der Variante einer Zeilenkamera 22 (= push-broom-scanner: Linienmessung von Spektren mit hoher lateraler, d.h. räumlicher Auflösung) wird vorteilhaft an einer Umlenkrolle 25 eingesetzt, um
a) eine ruhende Bahnposition zu betrachten,
b) eine Synchronisation mit der Relativbewegung der Elektrodenbahn zu erhalten,
c) eine Rückverfolgbarkeit der örtlichen Position zu ermöglichen und
d) eine stabile Messsituation zu schaffen (robust gegen Vibration, verdunkelbar, etc.).

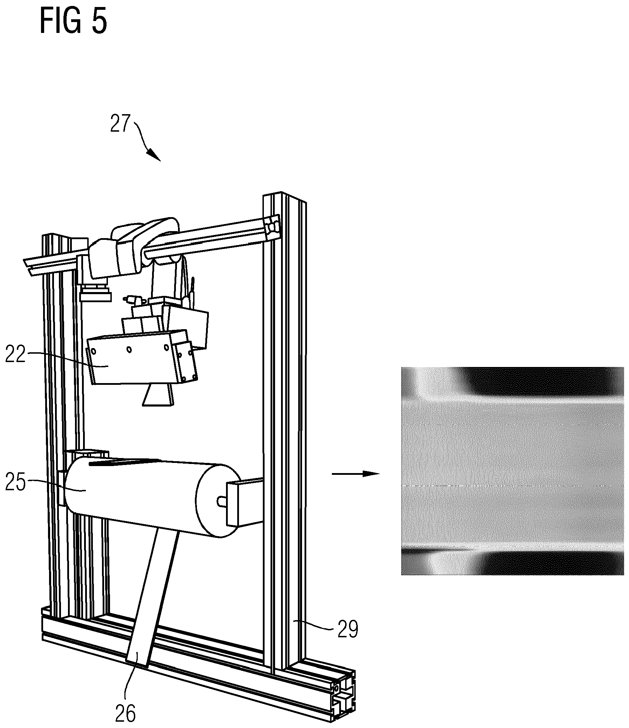

FIG. 5 zeigt eine Ansicht eines Teils der Vorrichtung zur hyperspektralen Bildgebung. In einem Tragegestell 29 ist die Umlenkrolle 25 und die Spektroskopie-Einheit 27 angeordnet. Die Spektroskopie-Einheit 27 weist die Linienkamera 22 auf, die kontinuierlich spektrale Bilder der vorbeiziehenden Elektrodenbahn 26 erfasst. Rechts in FIG. 5 ist eine derartige spektrale Aufnahme dargestellt.

Im SWIR (850-1700nm) zeigen sich hier (u.a. auch preisgünstig) deutliche Banden, die mit dem Gehalt an Wasser (= Feuchtegehalt) korreliert werden können. Im NIR (1200 - 2500 nm) sind noch spezifischere Banden möglich, aber der Preis der Geräte steigt stark an. Unter wirtschaftlichen Gesichtspunkten ist die Verwendung des SWIR daher vorteilhaft und ausreichend.

Das Messsystem ist dabei vorteilhaft an das Prozess-Leitsystem (PLC, Edge, etc. angebunden und erhält von hier Trigger zur Messung, welche eine spätere lokale Zuordnung der Messung zulassen.

Vorteilhaft ist hierbei die frühe Verarbeitung der Daten im Feld, nahe der Messstelle. Hierdurch sinkt die Last auf dem IT-System, da hohe Datenraten auf Grund der hohen Produktgeschwindigkeit auftreten und selbst moderne Hochgeschwindigkeitsnetze blockieren würden.

Bereits direkt nach der Messung wird daher der Datensatz vorverdichtet und ein Maß für die laterale Verteilung der Feuchte entlang der betrachteten Messlinie, d.h. ein Vektor der Inhomogenität der Feuchteverteilung, und ein mittlerer Feuchtegehalt, d.h. ein Skalar für die Messzeile, der Bahnposition zugeordnet.

Diese so ermittelte zu übertragende Information ist bereits um 2 bis 3 Größenordnungen geringer als die Rohdaten der eigentlichen Messung. (1 HSI Frame: 640x224px vs. 1 Auswerteergebnis: 640x1 Vektor + 1 Skalar)

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Trägerfolie
- 2: Slurry
- 3: Auftragswerkzeug
- 4: Beschichtungsrichtung
- 5: Draufsicht
- 6: intermittierende Beschichtung
- 7: Speicher für Slurry 2
- 8: Nassdickenmessung
- 9: Trockner
- 10: Dämpfe
- 11: Luftdüse
- 12: Abzug
- 13: Kühleinrichtung
- 14: Kühlwalzen
- 15: Kalander
- 16: Walzenpaar
- 17: Zugwerk
- 18: Einzug
- 19: Speicherrolle
- 20: Reinigungswerk
- 21: Mutterspule
- 22: Zeilenkamera
- 23: Auswerte- und Recheneinheit
- 23.1: Speichereinheit
- 24: Fertigungsleitsystem
- 25: Umlenkrolle
- 26: Elektrodenbahn
- 27: Spektroskopie-Einheit
- 28: Graviereinheit
- 29: Tragegestell

## Patentansprüche

1. Eine Vorrichtung zur hyperspektralen Bildgebung an Elektrodenbahnen (26, 1) bei der Elektrodenfertigung für Batteriezellen,
**gekennzeichnet durch**:
Mindestens eine hyperspektrale Spektroskopie-Einheit (27) aufweisend eine Zeilenkamera (21) zur Bildgebung, wobei die Spektroskopie-Einheit (27) angeordnet und eingerichtet ist,
- an einem vorgegebenen Ort der Elektrodenfertigung von der sich vorwärts bewegenden Elektrodenbahn (26, 1) hyperspektrale Bilder aufzunehmen,
- aus den Bildern ortsaufgelöste Feuchtegehalte der Elektrodenbahn (26, 1) zu ermitteln und
- bei einer Abweichung des Feuchtegehalts von einem vorgegebenen Sollwertbereich die örtliche Position in Längsrichtung der Elektrodenbahn (26, 1)25) zu ermitteln und zu sichern.

2. Die Vorrichtung nach Anspruch 1, **gekennzeichnet durch**:
- eine Umlenkrolle (25), über die die Elektrodenbahn (26, 1) geführt wird, wobei an der Position der Kontaktfläche zwischen der Umlenkrolle (25) und der Elektrodenbahn die Zeilenkamera (21) die Bilder aufnimmt.

3. Die Vorrichtung nach Anspruch 1 oder 2,
wobei das Sichern der örtlichen Position des vom Sollwerteberich abweichenden Feuchtegehalts durch Markieren auf der Elektrodenbahn (26, 1) erfolgt.

4. Die Vorrichtung nach Anspruch 1 oder 2,
**gekennzeichnet durch** eine Graviereinheit (28), die eingerichtet ist, das Markieren **durch** eine Gravur am Längsrand der Elektrodenbahn (26, 1) auszuführen.

5. Die Vorrichtung nach einem der vorhergehenden Ansprüche, **gekennzeichnet durch** eine Speichereinheit (23.1), die eingerichtet ist, spektrale Charakteristika des Feuchtegehalts als Ortskodierung entlang der Elektrodenbahn (25, 1) derart zu speichern, dass die Position des vom Sollwerteberich abweichenden Feuchtegehalts anhand der spektralen Charakteristika auffindbar ist.

6. Die Vorrichtung nach einem der vorhergehenden Ansprüche, **gekennzeichnet durch**:
- ein Fertigungsleitsystem (24), mit dem die Spektroskopie-Einheit (27) verbunden ist und das eingerichtet ist, die Spektroskopie-Einheit (27) zur Messung zu triggern.

7. Die Vorrichtung nach einem der vorhergehenden Ansprüche, **gekennzeichnet durch**:
- eine Auswerte- und Recheneinheit (23) am Ort der Spektroskopie-Einheit (27), wobei die Auswerte- und Recheneinheit (23) eingerichtet ist, Daten der spektroskopischen Bildgebung in einem Vektor zu verdichten und der örtlichen Position zuzuordnen.

8. Die Vorrichtung nach einem der vorhergehenden Ansprüche, **dadurch gekennzeichnet,**
**dass** die Zeilenkamera (22) eine SWIR-Zeilenkamera ist.

9. Die Vorrichtung nach einem der vorhergehenden Ansprüche, wobei die Spektroskopie-Einheit (27) eine KI - Engine aufweist, die eingerichtet ist, computergestützt die vom Sollwerteberich abweichenden Feuchtegehalte zu ermitteln.

10. Die Vorrichtung nach Anspruch 9, wobei die KI - Engine mittels Deep-Learning-Methoden trainiert ist, aus den Spektren die vom Sollwerteberich abweichenden Feuchtegehalte zu ermitteln.

11. Verfahren zur Ermittlung von Inhomogenitäten mittels hyperspektraler Bildgebung an Elektrodenbahnen (26, 1) bei der Elektrodenfertigung für Batteriezellen, **gekennzeichnet durch**:
- Aufnehmen von hyperspektralen Bildern an einem vorgegebenen Ort der Elektrodenfertigung von der sich vorwärts bewegenden Elektrodenbahn (26, 1),
- Ermittlung von ortsaufgelösten Feuchtegahlten der Elektrodenbahn aus den Spektren der Bilder und
- Ermittlung und Sicherung der örtlichen Position der von einem vorgegebenen Sollwerteberich abweichenden Feuchtegehalte in Längsrichtung der Elektrodenbahn (26, 1).

12. Das Verfahren nach Anspruch 11, **dadurch gekennzeichnet, dass** an der Position der Kontaktfläche zwischen einer Umlenkrolle (25), über die die Elektrodenbahn geführt wird, und der Elektrodenbahn die Zeilenkamera die Bilder aufnimmt.

13. Das Verfahren nach Anspruch 11 oder 12,
wobei das Sichern der örtlichen Position des vom Sollwerteberich abweichenden Feuchtegehalts durch ein Markieren auf der Elektrodenbahn erfolgt.

14. Das Verfahren nach einem der Ansprüche 11 bis 13, **dadurch gekennzeichnet,**
**dass** die spektralen Charakteristika des vom Sollwerteberich abweichenden Feuchtegehalts als Ortskodierung entlang der Elektrodenbahn derart gesichert werden, dass die Position des vom Sollwerteberich abweichenden Feuchtegehalts anhand der spektralen Charakteristika auffindbar ist.

15. Das Verfahren nach einem der Ansprüche 11 bis 14, wobei mittels einer KI - Engine computergestützt die vom Sollwerteberich abweichenden Feuchtegehalte ermittelt werden.
